(19) Europäisches Patentamt
European Patent Office
Office européen des brevets

(11) **EP 2 566 083 A2**

(12) # EUROPEAN PATENT APPLICATION

(43) Date of publication:
**06.03.2013 Bulletin 2013/10**

(51) Int Cl.:
***H04J 14/02*** *(2006.01)*

(21) Application number: **12179192.5**

(22) Date of filing: **03.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2011 JP 2011188168**

(71) Applicant: **FUJITSU LIMITED**
**Kawasaki-shi,**
**Kanagawa 211-8588 (JP)**

(72) Inventors:
• **Kato, Tomoyuki**
**Kanagawa, 211-8588 (JP)**
• **Watanabe, Shigeki**
**Kanagawa, 211-8588 (JP)**

(74) Representative: **HOFFMANN EITLE**
**Patent- und Rechtsanwälte**
**Arabellastrasse 4**
**81925 München (DE)**

(54) **Optical multiplexing apparatus and optical network system**

(57) There is provided an optical multiplexing apparatus including an extraction unit configured to extract a pilot signal multiplexed on light propagated on a transmission line, a generator configured to generate an optical subcarrier modulated signal based on a data signal to be transmitted on the transmission line and the pilot signal extracted by the extraction unit, a multiplexer configured to multiplex the optical subcarrier modulated signal generated by the generator with carrier light in order to multiplex the data signal on the carrier light propagated on the transmission line, and a nonlinear optical medium which is provided on the transmission line and on which the carrier light multiplexed by the multiplexer is incident.

FIG. 1

**Description**

FIELD

The embodiments discussed herein are related to optical multiplexing apparatuses that multiplex information on carrier light and to an optical network system.

BACKGROUND

Hitherto, technologies for optical multiplex transmission of information include Wavelength Division Multiplexing (WDM). The WDM is a technology to multiplex optical signals having different frequencies to transmit multiple pieces of information on one optical fiber.

Future optical networks desirably perform processing, such as branching and insertion or switching of optical signals, in apparatuses placed at points apart from terminal apparatuses, such as optical relay nodes, for example, on the basis of optical communication systems in related art. In the processing, it is effective in terms of energy efficiency to propagate and process information without conversion between optical signals and electrical signals as far as possible.

However, the current optical relay nodes perform signal processing by using photoelectric conversion, as in the terminal apparatuses. For example, the current optical relay nodes convert propagated optical signals into electrical signals, electrically process the electrical signals, and then convert the electrical signals into optical signals. Accordingly, the configurations are made complicated and electric power for the photoelectric conversion is large.

A variety of information is monitored in real time at various points to effectively perform network control on the basis of the information in the optical networks. The amount of information is increased in the future optical networks and it is effective to realize energy-saving optical networks. In order to realize more flexible optical networks, a function to incorporate information into the networks not only at the optical nodes but also at arbitrary points is effectively used.

However, the insertion of information is performed in the optical node apparatuses or the terminal apparatuses in the present situations. In particular, as for the monitor information, the optical signal is subjected to the photoelectric conversion and the monitor information is electrically set into header parts of the optical signal. Alternatively, the monitor information is propagated using dedicated light waves.

Relay stations using phase conjugate light have been heretofore proposed as relay stations provided between transmitters and receivers via optical transmission lines. The relay stations each include a phase conjugate light generating apparatus including a signal light and pump light supplying unit that supplies input signal light from the transmitter and pump light to a nonlinear optical medium and a signal light and phase conjugate light extraction unit that extracts output signal light and phase conjugate light generated by the input signal light and the pump light that are supplied to the nonlinear optical medium and a modulating unit that modulates the pump light with monitoring data specific to the relay station, and each transmits the phase conjugate light including the monitoring data subjected to the modulation to the receiver (for example, Japanese Patent No. 3436310).

However, there is a problem in that decreasing the wavelength spacing so as to increase the number of carrier lights in order to realize more broadband information transmission causes, for example, the wavelengths of adjacent carrier lights to be overlapped with each other due to fluctuation of the wavelength of each carrier light to make the information transmission unstable.

SUMMARY

Accordingly, it is an object of an embodiment to provide an optical multiplexing apparatus and an optical network system capable of stable multiplex transmission of information at high density.

According to an aspect of the embodiment, there is provided an optical multiplexing apparatus including an extraction unit configured to extract a pilot signal multiplexed on light propagated on a transmission line, a generator configured to generate an optical subcarrier modulated signal based on a data signal to be transmitted on the transmission line and the pilot signal extracted by the extraction unit, a multiplexer configured to multiplex the optical subcarrier modulated signal generated by the generator with carrier light in order to multiplex the data signal on the carrier light propagated on the transmission line, and a nonlinear optical medium which is provided on the transmission line and on which the carrier light multiplexed by the multiplexer is incident.

BRIEF DESCRIPTION OF DRAWINGS

FIG. 1 illustrates an optical network system using optical multiplexing apparatuses according to a first embodiment;

FIG. 2 illustrates optical spectra in the optical network system;
FIG. 3 is a block diagram of an optical multiplexing apparatus;
FIG. 4 is a diagram for describing spectra in the optical multiplexing apparatus;
FIG. 5 is a block diagram of a pilot signal extraction unit;
FIG. 6 is a block diagram of a control light generator;
FIG. 7 is a diagram for describing the effect of frequency fluctuation of carrier lights in WDM;
FIG. 8 is a diagram for describing the effect of the frequency fluctuation of a carrier light in the optical multiplexing apparatuses in FIG. 3;
FIG. 9 is a diagram for describing the effect of the frequency fluctuation when local oscillators are used;
FIG. 10 is a diagram for describing the effect of the frequency fluctuation of a pilot signal;
FIG. 11 is a diagram for describing the effect of the phase fluctuation in a receiver when local oscillators are used;
FIG. 12 is a diagram for describing the effect of the phase fluctuation in the receiver in the optical multiplexing apparatuses in FIG. 3;
FIG. 13 is a block diagram of a control light generator according to a second embodiment;
FIG. 14 is a block diagram of an optical frequency multiplier shifter;
FIG. 15 is a block diagram of a control light generator according to a third embodiment;
FIG. 16 is a block diagram of an optical multiplexing apparatus according to a fourth embodiment; and
FIG. 17 is a diagram for describing the spectra of signals in the optical multiplexing apparatus in FIG. 16.

DESCRIPTION OF EMBODIMENTS

Embodiments will herein be described in detail with reference to the attached drawings.

[First embodiment]

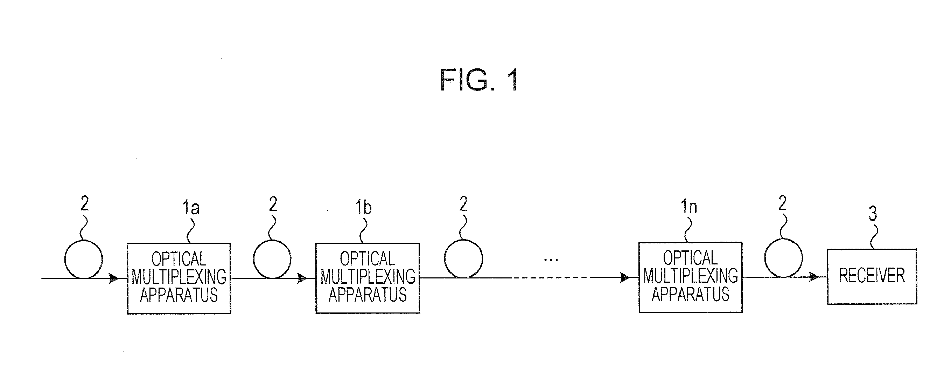

FIG. 1 illustrates an optical network system using optical multiplexing apparatuses according to a first embodiment. Referring to FIG. 1, the optical network system includes optical multiplexing apparatuses 1a to 1n, a transmission line 2, and a receiver 3. The optical multiplexing apparatuses 1a to 1n are provided on the transmission line 2. The transmission line 2 is, for example, an optical fiber.

Carrier light is propagated on the transmission line 2. The carrier light is continuous wave (CW) light. Alternatively, the carrier light is an optical signal subjected to baseband modulation. It is assumed that the bit rate of the optical signal subjected to the baseband modulation is sufficiently lower than the frequency (the frequency of the light intensity) of an optical subcarrier modulated signal described below. It is also assumed that the bit rate of the optical signal subjected to the baseband modulation is sufficiently lower than the frequency (the frequency of the light intensity) of a pilot signal described below.

A data signal transmitted by using the carrier light is transmitted from, for example, an apparatus (not illustrated) to the optical multiplexing apparatuses 1a to 1n. The data signal is transmitted as, for example, an electrical signal. The optical multiplexing apparatuses 1a to 1n generate optical subcarrier modulated signals having different frequencies on the basis of the data signal to be transmitted on the transmission line 2 and the pilot signal propagated on the transmission line 2. Each of the optical multiplexing apparatuses 1a to 1n modulates the carrier light propagated on the transmission line 2 with the generated optical subcarrier modulated signal and performs frequency multiplexing of the data signal on the carrier light.

The receiver 3 receives the carrier light propagated on the transmission line 2 and performs demodulation to the carrier light to receive the data signal transmitted from the optical multiplexing apparatuses 1a to 1n. The data signal is received by, for example, optical direct detection, heterodyne detection, or coherent detection.

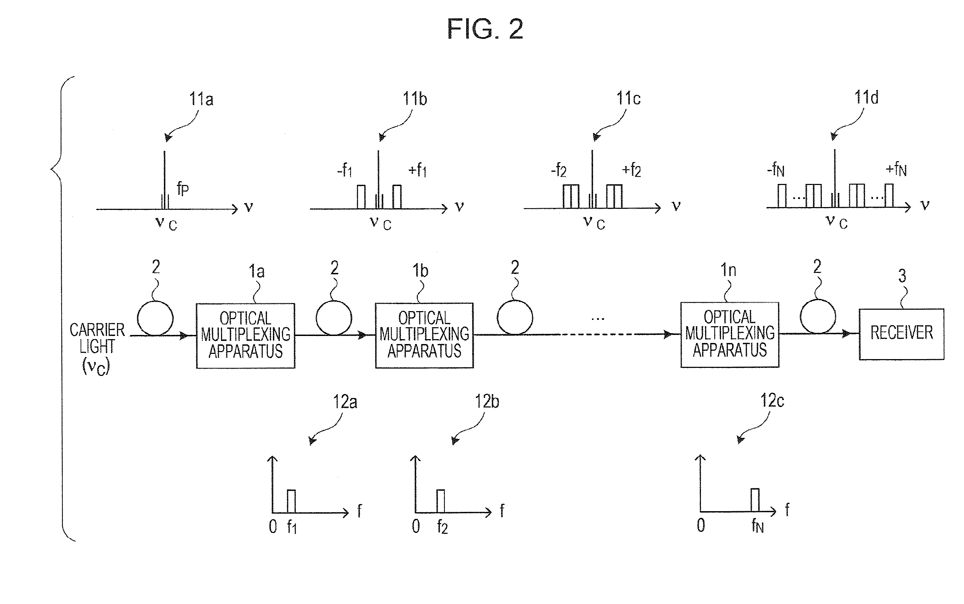

FIG. 2 illustrates optical spectra in the optical network system. The same reference numerals are used in FIG. 2 to identify the same components illustrated in FIG. 1. The carrier light having an optical frequency $\nu_c$ is propagated on the transmission line 2.

Spectra 11a to 11d illustrated in FIG. 2 indicate spectra of the carrier light propagated on the transmission line 2. The horizontal axis represents optical frequency and the vertical axis represents power in each of the spectra 11a to 11d.

Spectra 12a to 12c illustrated in FIG. 2 each indicate the light intensity and the frequency of the optical subcarrier modulated signal to be multiplexed on the carrier light. The horizontal axis represents frequency and the vertical axis represents power in each of the spectra 12a to 12c.

Reference letter $\nu_c$ in the spectra 11a to 11d denotes the optical frequency of the carrier light propagated on the transmission line 2. Reference letter fp in the spectra 11a to 11d denotes the frequency of the pilot signal propagated on the transmission line 2. The pilot signal is propagated on the transmission line 2 with being multiplexed on the carrier light, as indicated in the spectra 11a to 11d. The pilot signal may be propagated on the transmission line 2 with being multiplexed on light other than the carrier light.

The optical multiplexing apparatuses 1a to 1n each extract the pilot signal multiplexed on the carrier light. The optical multiplexing apparatuses 1a to 1n generate the optical subcarrier modulated signals having different frequencies on the basis of the extracted pilot signal and the data signal to be transmitted on the transmission line 2. For example, the optical multiplexing apparatuses 1a to 1n generate the optical subcarrier modulated signals having frequencies $f_1$, $f_2$, and $f_N$, as illustrated in the spectra 12a to 12c.

The optical multiplexing apparatuses 1a to 1n multiplex the generated optical subcarrier modulated signals on the carrier light. The carrier light with which the optical subcarrier modulated signals is multiplexed is subjected to optical intermodulation using the optical subcarrier modulated signals with a nonlinear optical medium on the transmission line 2, as described below. As a result, the optical subcarrier modulated signals having the frequencies $f_1$, $f_2$, and $f_N$ are subjected to the frequency multiplexing on the carrier light having the optical frequency $\nu_c$, as illustrated in the spectra 11a to 11d.

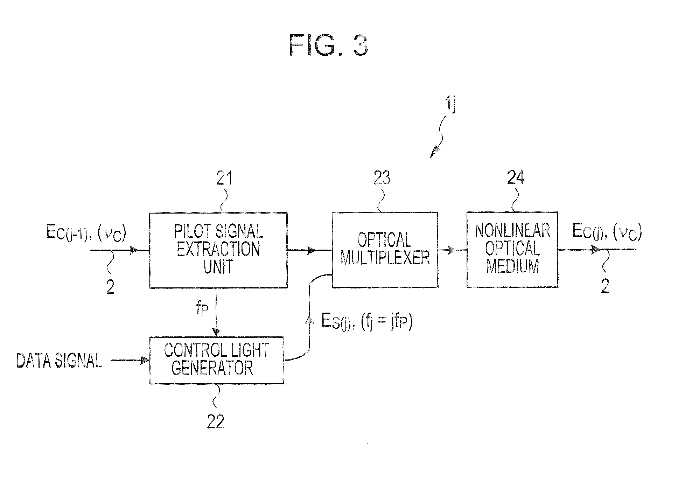

FIG. 3 is a block diagram of an optical multiplexing apparatus. The optical multiplexing apparatus illustrated in FIG. 3 is the j-th optical multiplexing apparatus from the left in the optical multiplexing apparatuses 1a to 1n illustrated in FIG. 2. Referring to FIG. 3, an optical multiplexing apparatus 1j includes a pilot signal extraction unit 21, a control light generator 22, an optical multiplexer 23, and a nonlinear optical medium 24. The optical multiplexing apparatuses 1a to 1n excluding the j-th optical multiplexing apparatus have the same blocks as the ones illustrated in FIG. 3.

Carrier light $E_{c(j-1)}$ having the optical frequency $\nu_c$ propagated on the transmission line 2 is input into the pilot signal extraction unit 21. The pilot signal extraction unit 21 extracts the pilot signal multiplexed on the carrier light $E_{c(j-1)}$ to extract the frequency fp of the pilot signal.

The data signal transmitted on the transmission line 2 and the frequency fp of the pilot signal extracted by the pilot signal extraction unit 21 are input into the control light generator 22. The control light generator 22 generates control light (an optical subcarrier modulated signal $E_{s(j)}$) for multiplexing the data signal on the carrier light $E_{c(j-1)}$. The control light generator 22 generates the optical subcarrier modulated signal $E_{s(j)}$ having a frequency $f_j$ on the basis of the data signal and the frequency fp of the pilot signal. The frequency $f_j$ has the following relationship:

$$f_j = jf_p \qquad (1)$$

Accordingly, for example, an optical subcarrier modulated signal $E_{s1}$ having the frequency fp is output from the optical multiplexing apparatus 1a in FIG. 2 and an optical subcarrier modulated signal $E_{s2}$ having a frequency 2fp is output from the optical multiplexing apparatus 1b in FIG. 2. An optical subcarrier modulated signal $E_{sn}$ having a frequency nfp is output from the optical multiplexing apparatus 1n in FIG. 2. In other words, the optical subcarrier modulated signals having different frequencies are output from the optical multiplexing apparatuses 1a to 1n.

The optical multiplexer 23 multiplexes the optical subcarrier modulated signal generated by the control light generator 22 with the carrier light in order to multiplex the optical subcarrier modulated signal on the carrier light propagated on the transmission line 2 in the nonlinear optical medium on the transmission line 2.

The carrier light with which the optical subcarrier modulated signal is multiplexed is input into the nonlinear optical medium 24. The carrier light input into the nonlinear optical medium 24 is subjected to the optical intermodulation using the optical subcarrier modulated signal with the nonlinear optical medium 24 to multiplex the optical subcarrier modulated signal on the carrier light.

For example, optical phase modulation by cross phase modulation or light intensity modulation using an optical parametric effect may be used as the optical intermodulation with the nonlinear optical medium. For example, an optical fiber, or a semiconductor optical amplifier, or an optical waveguide with a high refractive-index, such as silicon wire waveguide, or a lithium niobate ($LiNbO_3$) with a periodically polarization reversed structure may be used as the nonlinear optical medium. The optical fiber of the transmission line 2 may be used as the nonlinear optical medium 24 to perform the optical intermodulation of the carrier light $E_{c(j-1)}$ using the optical subcarrier modulated signal.

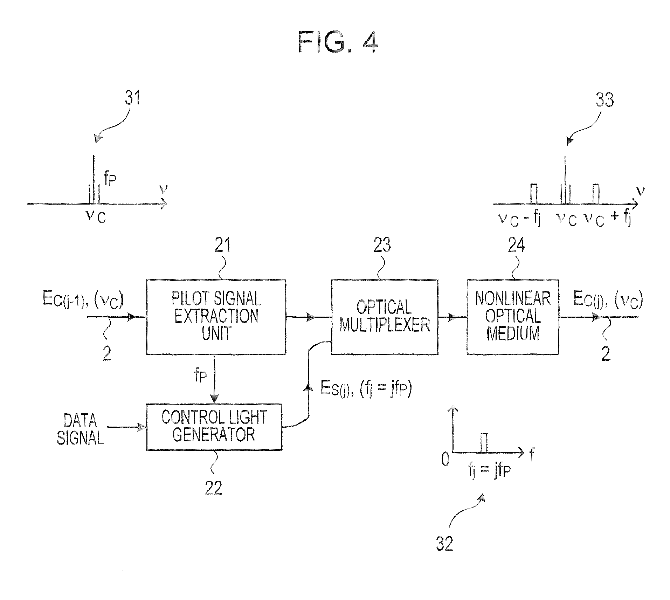

FIG. 4 is a diagram for describing spectra in the optical multiplexing apparatus. The same reference numerals are used in FIG. 4 to identify the same components illustrated in FIG. 3. Referring to FIG. 4, a spectrum 31 indicates the spectrum of the carrier light $E_{c(j-1)}$ propagated on the transmission line 2. The horizontal axis represents optical frequency and the vertical axis represents power in the spectrum 31. The pilot signal having the frequency fp is multiplexed on the carrier light $E_{c(j-1)}$, as illustrated in the spectrum 31.

A spectrum 32 indicates the spectrum of the optical subcarrier modulated signal generated by the control light generator 22. The horizontal axis represents frequency and the vertical axis represents power in the spectrum 32. The control light generator 22 generates the optical subcarrier modulated signal having a frequency jfp on the basis of the pilot signal having the frequency fp and the data signal, as illustrated in the spectrum 32.

A spectrum 33 indicates the spectrum of carrier light $E_{c(j)}$ output from the nonlinear optical medium 24. The horizontal axis represents optical frequency and the vertical axis represents power in the spectrum 33. The optical subcarrier modulated signal is multiplexed on the carrier light $E_{c(j)}$ at an optical frequency $\pm f_j$ ($f_j = jf_p$) from the optical frequency $\nu_c$, as illustrated in the spectrum 33.

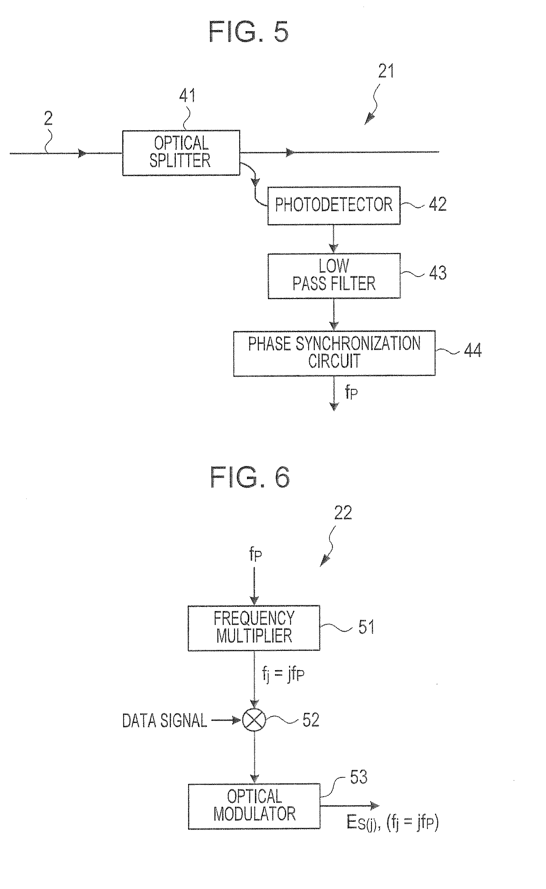

FIG. 5 is a block diagram of the pilot signal extraction unit 21. Referring to FIG. 5, the pilot signal extraction unit 21 includes an optical splitter 41, a photodetector 42, a low pass filter 43, and a phase synchronization circuit 44.

The optical splitter 41 splits the carrier light from the transmission line 2. The split carrier light is supplied to the photodetector 42. The photodetector 42 converts the light supplied from the optical splitter 41 into an electrical signal.

The low pass filter 43 passes a lower frequency component of the electrical signal supplied from the photodetector 42. The cutoff frequency of the low pass filter 43 is the frequency fp of the pilot signal. In other words, the low pass filter 43 extracts the pilot signal. When the photodetector 42 has a narrow bandwidth, the low pass filter 43 may not be provided.

The phase synchronization circuit 44 extracts the frequency fp of the pilot signal supplied from the low pass filter 43. The phase synchronization circuit 44 is, for example, a phase locked loop (PLL). We may use optical demultiplexer in spite of the optical splitter 41 and the low pass filter 43.

FIG. 6 is a block diagram of the control light generator 22. Referring to FIG. 6, the control light generator 22 includes a frequency multiplier 51, a multiplier 52, and an optical modulator 53.

The frequency multiplier 51 generates a subcarrier signal having a frequency resulting from multiplication of the frequency of the signal having the frequency fp supplied from the pilot signal extraction unit 21. For example, the frequency multiplier 51 generates the subcarrier signal having the frequency $f_j$ represented by the Equation (1) described above.

The subcarrier signal output from the frequency multiplier 51 and the data signal to be transmitted on the transmission line 2 are input into the multiplier 52. The multiplier 52 outputs a signal resulting from multiplication of the subcarrier signal by the data signal. In other words, the multiplier 52 outputs a subcarrier modulated signal resulting from modulation of the subcarrier signal supplied from the frequency multiplier 51 with the data signal.

The optical modulator 53 outputs the optical subcarrier modulated signal $E_{s(j)}$ having the light intensity corresponding to the variation in the subcarrier modulated signal output from the multiplier 52. The optical subcarrier modulated signal $E_{s(j)}$ output from the optical modulator 53 is supplied to the optical multiplexer 23 illustrated in FIG. 3 to be multiplexed on the carrier light propagated on the transmission line 2.

The optical modulator 53 is, for example, a laser diode. The subcarrier modulated signal output from the multiplier 52 is input into the laser diode as drive current. Alternatively, the optical modulator 53 may be a Mach-Zehnder modulator (lithium niobate (LN) modulator). For example, the Mach-Zehnder modulator (LN modulator) modulates the CW light output from a CW light source with the data signal.

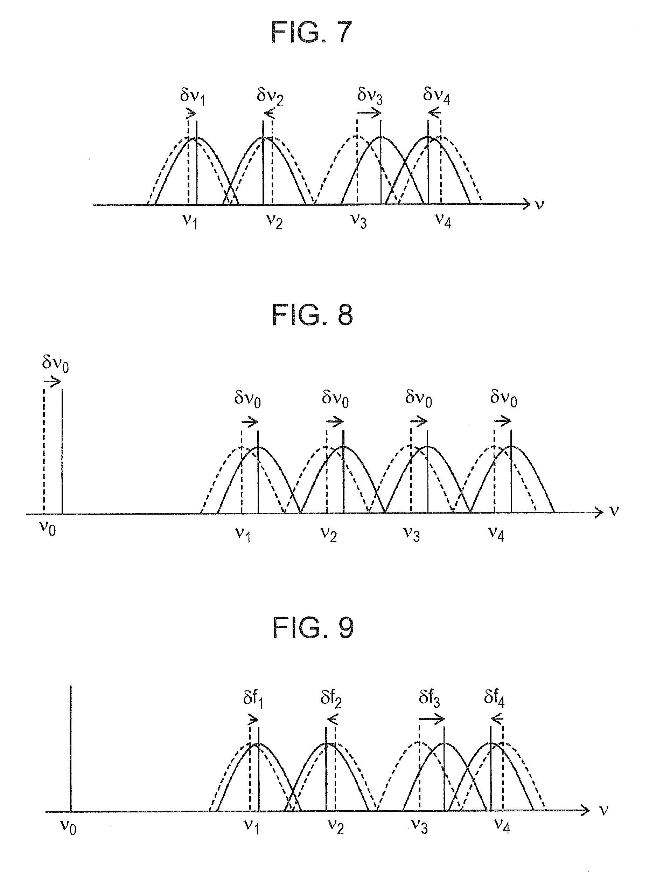

FIG. 7 is a diagram for describing the effect of frequency fluctuation of carrier lights in the WDM. The spectra of the carrier lights in the WDM, propagated on a transmission line, are illustrated in FIG. 7. The horizontal axis represents optical frequency and the vertical axis represents power in FIG. 7.

Optical frequencies $\nu_1$ to $\nu_4$ indicate the optical frequencies of four carrier lights propagated on one transmission line. The four carrier lights are output from four light sources.

In order to realize more broadband information transmission in the WDM, the wavelength spacing of the carrier lights is decreased to increase the number of the carrier lights transmitted on the transmission line. In this case, it is desirable for the light sources to output the carrier lights having accurate frequencies. For example, when the frequencies of the carrier lights output from the four light sources fluctuate in a manner illustrated by arrows in FIG. 7, the frequencies (wavelengths) of adjacent carrier lights are overlapped with each other. In this case, the information transmitted with the carrier lights is not appropriately transmitted.

FIG. 8 is a diagram for describing the effect of the frequency fluctuation of the carrier light in the optical multiplexing apparatuses in FIG. 3. The spectrum of the carrier light propagated on the transmission line 2 and the spectra of the optical subcarrier modulated signals multiplexed on the carrier light are illustrated in FIG. 8. The horizontal axis represents optical frequency and the vertical axis represents power in FIG. 8. Reference letter $\nu 0$ denotes the optical frequency of the carrier light and reference letters $\nu_1$ to $\nu_4$ denote the optical frequencies of the optical subcarrier modulated signals generated by four optical multiplexing apparatuses illustrated in FIG. 3.

It is assumed that the frequency of the carrier light fluctuates by $\delta\nu_0$, as illustrated by a leftmost arrow in FIG. 8. In this case, the optical frequencies $\nu_1$ to $\nu_4$ of the optical subcarrier modulated signals generated by the four optical multiplexing apparatuses also fluctuate by $\delta\nu_0$, as illustrated by right-side four arrows in FIG. 8. Accordingly, the optical frequencies $\nu_1$ to $\nu_4$ of the optical subcarrier modulated signals are not overlapped with each other even if the frequency of the carrier light fluctuates in the optical multiplexing apparatuses in FIG. 3, so that it is possible to appropriately transmit information.

Specifically, the optical subcarrier modulated signals are generated on the basis of the pilot signal multiplexed on the carrier light and the data signal in the optical multiplexing apparatuses in FIG. 3. Accordingly, when the optical frequency $\nu 0$ of the carrier light fluctuates in the manner illustrated in FIG. 8, the pilot signal fluctuates in the same manner as in the optical frequency $\nu_0$. The optical subcarrier modulated signals generated on the basis of the pilot signal also fluctuate in the same manner as in the pilot signal. Consequently, the optical frequencies $v_1$ to $v_4$ of the optical subcarrier modulated signals are not overlapped with each other, so that it is possible to appropriately transmit information. Since the optical frequencies of the optical subcarrier modulated signals are not overlapped with each other even if the frequency of the carrier light fluctuates, it is possible to realize the information transmission at high density.

FIG. 9 is a diagram for describing the effect of the frequency fluctuation when local oscillators are used. The spectra when the four optical multiplexing apparatuses use the local oscillators to generate the optical subcarrier modulated signals are illustrated in FIG. 9. For example, the spectra in FIG. 9 correspond to a case in which the subcarrier signal output from the frequency multiplier 51 is not input into the multiplier 52 in the control light generator 22 illustrated in FIG. 6 but the subcarrier signal output from the local oscillator is input into the multiplier 52. Specifically, the spectra in FIG. 9 correspond to a case in which the four optical multiplexing apparatuses individually generate the subcarrier signals with the local oscillators to generate the optical subcarrier modulated signals. The horizontal axis represents optical frequency and the vertical axis represents power in FIG. 9.

When the four optical multiplexing apparatuses individually generate the subcarrier signals with the local oscillators, the optical subcarrier modulated signals may be overlapped with each other due to the frequency (phase) fluctuation in the local oscillators, as illustrated by arrows in FIG. 9. In this case, the information transmitted on the carrier light is not appropriately transmitted.

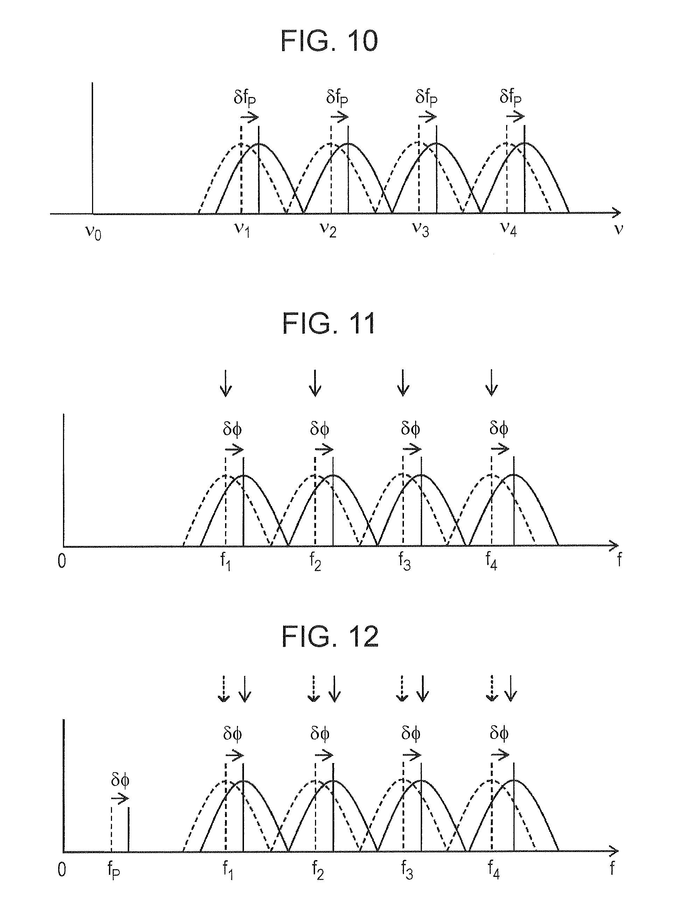

FIG. 10 is a diagram for describing the effect of the frequency fluctuation of the pilot signal. The spectra of the optical subcarrier modulated signals are illustrated in FIG. 10. The horizontal axis represents optical frequency and the vertical axis represents power in FIG. 10. Reference numeral $v_0$ denotes the optical frequency of the carrier light and reference numerals $v_1$ to $v_4$ denote the optical frequencies of the optical subcarrier modulated signals generated by the four optical multiplexing apparatuses illustrated in FIG. 3.

It is assumed that the frequency (phase) of the pilot signal multiplexed on the carrier light fluctuates. Also in this case, since the pilot signal is commonly used in the four optical multiplexing apparatuses in FIG. 3, the frequency of the pilot signal fluctuates in the same manner in the respective optical multiplexing apparatuses. In other words, the optical frequencies $v_1$ to $v_4$ of the optical subcarrier modulated signals are not overlapped with each other, as illustrated in FIG. 10, even if the frequency of the pilot signal fluctuates in the optical multiplexing apparatuses in FIG. 3, so that it is possible to appropriately transmit information. In addition, since the optical frequencies of the optical subcarrier modulated signals are not overlapped with each other even if the frequency of the pilot signal fluctuates, it is possible to realize the information transmission at high density.

FIG. 11 is a diagram for describing the effect of the phase fluctuation in the receiver when the local oscillators are used. The spectra of the optical subcarrier modulated signals are illustrated in FIG. 11. The horizontal axis represents frequency and the vertical axis represents power in FIG. 11. Reference numerals $f_1$ to $f_4$ denote the frequencies when the four optical multiplexing apparatuses generate the optical subcarrier modulated signals with the local oscillators.

It is assumed that, although the optical subcarrier modulated signals originally have the frequencies $f_1$ to $f_4$ and are propagated on the transmission line, the frequencies of the optical subcarrier modulated signals are shifted by $\delta\phi$ on the transmission line, as illustrated by right arrows in FIG. 11.

The receiver receiving the carrier light generates the frequencies $f_1$ to $f_4$ with the local oscillators to identify (extract) the optical subcarrier modulated signals illustrated by down arrows in FIG. 11. However, the receiver does not identify the optical subcarrier modulated signals when the frequencies of the optical subcarrier modulated signals are shifted because the frequencies $f_1$ to $f_4$ generated in the local oscillators are made different from the frequencies of the optical subcarrier modulated signals.

FIG. 12 is a diagram for describing the effect of the phase fluctuation in the receiver in the optical multiplexing apparatuses in FIG. 3. The spectra of the optical subcarrier modulated signals are illustrated in FIG. 12. The horizontal axis represents frequency and the vertical axis represents power in FIG. 12. Reference letters $f_1$ to $f_4$ denote the frequencies when the four optical multiplexing apparatuses in FIG. 3 generate the optical subcarrier modulated signals on the basis of the pilot signal.

The optical multiplexing apparatuses illustrated in FIG. 3 generate the optical subcarrier modulated signals on the basis of the pilot signal multiplexed on the carrier light. The receiver is capable of generating the frequencies $f_1$ to $f_4$ for identifying the optical subcarrier modulated signals on the basis of the pilot signal multiplexed on the carrier light.

Accordingly, even if the phases of the optical subcarrier modulated signals fluctuate on the transmission line 2, the receiver is capable of generating the frequencies for identifying the optical subcarrier modulated signals with the pilot signal having fluctuation similar to the phase fluctuation. Specifically, the receiver is capable of appropriately identifying the optical subcarrier modulated signals even if the phases for identifying the optical subcarrier modulated signals are varied from broken down arrows to solid down arrows.

As described above, the optical multiplexing apparatus extracts the pilot signal multiplexed on the light propagated on the transmission line 2 and generates the optical subcarrier modulated signal on the basis of the extracted pilot signal and the data signal to be transmitted on the transmission line 2. The optical multiplexing apparatus multiplexes the optical subcarrier modulated signal with the carrier light in order to multiplex the optical subcarrier modulated signal on the carrier light propagated on the transmission line 2 in the nonlinear optical medium 24 on the transmission line 2. Accordingly, the optical multiplexing apparatus is capable of stable multiplex transmission of information at high density.

Although the optical multiplexing apparatus generates one optical subcarrier modulated signal to multiplex the optical subcarrier modulated signal on the carrier light in the above description, the optical multiplexing apparatus may generate multiple optical subcarrier modulated signals to multiplex the optical subcarrier modulated signals on the carrier light.

For example, referring to FIG. 6, the frequency multiplier 51 generates the subcarrier signals having two different frequencies kfp and $(k+1)f_p$ resulting from multiplication of the frequency $f_p$. The optical multiplexing apparatus modulates the subcarrier signals having the frequencies $kf_p$ and $(k+1)f_p$ with the data signal by using two multipliers and generates two optical subcarrier modulated signals by using two optical modulators. Then, the optical multiplexing apparatus supplies a signal resulting from addition of the two optical subcarrier modulated signals to the optical multiplexer 23.

Alternatively, when multiple optical subcarrier modulated signals are generated, the optical multiplexing apparatus may supply a signal resulting from the addition of the multiple optical subcarrier modulated signals to the optical multiplexer 23 after being passed through the nonlinear optical medium. In this case, it is possible to suppress instantaneous light power of the optical subcarrier modulated signals and to suppress an increase in stroke in the nonlinear optical medium 24.

Alternatively, the optical multiplexing apparatus may control the optical subcarrier modulated signal output from the control light generator 22 so as to be polarized equal to the carrier light to multiplex the optical subcarrier modulated signal on the carrier light. For example, referring to FIG. 4, a polarization controller may be provided between the control light generator 22 and the optical multiplexer 23. In this case, it is possible to perform the optical intermodulation with high efficiency in the nonlinear optical medium 24.

[Second embodiment]

A second embodiment will now be described in detail with reference to the drawings. Another embodiment of the control light generator 22 is described here. An optical network system in the second embodiment is the same as the optical network system in FIG. 1. Although the block diagram of an optical multiplexing apparatus is similar to that of the optical multiplexing apparatus in FIG. 3, the optical multiplexing apparatus in the second embodiment differs from the optical multiplexing apparatus in the first embodiment in the control light generator 22.

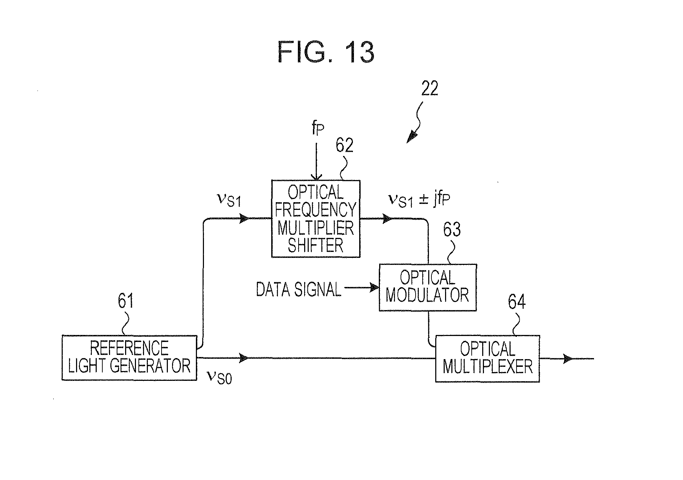

FIG. 13 is a block diagram of the control light generator 22 according to the second embodiment. Referring to FIG. 13, the control light generator 22 includes a reference light generator 61, an optical frequency multiplier shifter 62, an optical modulator 63, and an optical multiplexer 64.

The reference light generator 61 outputs two CW lights having optical frequencies $\nu_{s0}$ and $\nu_{s1}$. The optical frequencies $\nu_{s0}$ and $\nu_{s1}$ of the two CW lights may be equal to each other. The reference light generator 61 is, for example, an optical comb source. The optical comb source is capable of generating the CW lights having an optical frequency spacing based on the frequency fp of the pilot signal. The two CW lights having the optical frequencies $\nu_{s0}$ and $\nu_{s1}$ are capable of extracting two mode components having an optical frequency spacing $k \cdot f_p$ of the optical comb source with an optical wavelength demultiplexer ($\nu_{s1} = \nu_{s0} \pm k \cdot f_p$). Alternatively, the reference light generator 61 may split the light output from the CW light source into two components with an optical splitter to acquire the CW lights having the same optical frequency ($\nu_{s1} = \nu_{s0}$).

The frequency fp of the pilot signal output from the pilot signal extraction unit 21 and the CW light having the optical frequency $\nu_{s1}$ output from the reference light generator 61 are input into the optical frequency multiplier shifter 62. The optical frequency multiplier shifter 62 shifts the optical frequency $\nu_{s1}$ of the CW light supplied from the reference light generator 61 by an integer multiple of the frequency fp of the pilot signal. For example, the optical frequency multiplier shifter 62 may shift the optical frequency $\nu_{s1}$ of the CW light by an integer multiple of j of the frequency fp of the pilot signal to output the CW light (subcarrier light) having an optical frequency represented in Equation (2):

$$\nu'_{s1} = \nu_{s1} \pm jf_p \qquad (2)$$

The subcarrier light output from the optical frequency multiplier shifter 62 and the data signal transmitted on the transmission line 2 are input into the optical modulator 63. The optical modulator 63 modulates the subcarrier light with the data signal.

The optical modulator 63 is, for example, a $LiNbO_3$ optical modulator or an electro absorption (EA) modulator. The optical modulator 63 performs the light intensity modulation or the phase modulation of the subcarrier signal with the data signal. The optical modulator 63 may be formed of a nonlinear optical medium, such as an optical fiber, a semiconductor optical amplifier, or a silicon wire waveguide, or a nonlinear optical medium made of lithium niobate

(LiNbO$_3$) with a periodically polarization reversed structure.

The CW light having the optical frequency $\nu_{s0}$ output from the reference light generator 61 and the subcarrier signal modulated with the data signal are input into the optical multiplexer 64. The optical multiplexer 64 multiplexes the CW light having the optical frequency $\nu_{s0}$ with the subcarrier signal modulated with the data signal. Accordingly, the optical subcarrier modulated signal having a frequency represented in Equation (3) is output from the optical multiplexer 64:

$$f_j = |\nu_{s0}\text{-}\nu'_{s1}| = |\nu_{s0}\text{-}(\nu_{s1} \pm jf_p)| \qquad (3)$$

The optical subcarrier modulated signal output from the optical multiplexer 64 is supplied to, for example, the optical multiplexer 23 illustrated in FTG. 3.

Although the optical modulator 63 is provided between the optical frequency multiplier shifter 62 and the optical multiplexer 64 in the control light generator 22 illustrated in FIG. 13, the optical modulator 63 may be provided between the reference light generator 61 and the optical multiplexer 64. Alternatively, the optical modulator 63 may be provided between the optical frequency multiplier shifter 62 and the optical multiplexer 64 and the optical modulator may be provided between the reference light generator 61 and the optical multiplexer 64. In this case, the same data signal is input into the optical modulator 63 and the optical modulator provided between the reference light generator 61 and the optical multiplexer 64. The optical modulator 63 may be provided downstream of the optical multiplexer 64.

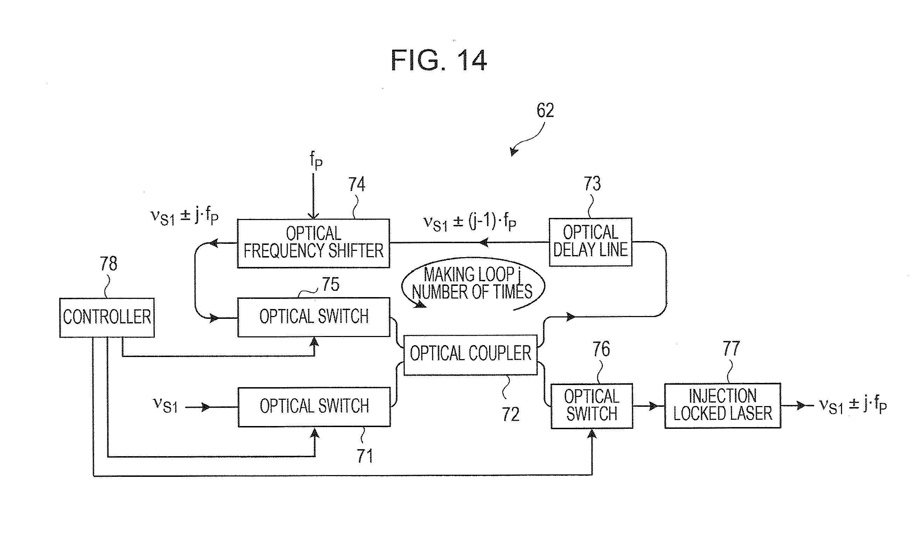

FIG. 14 is a block diagram of the optical frequency multiplier shifter 62. Referring to FIG. 14, the optical frequency multiplier shifter 62 includes optical switches 71, 75, and 76, an optical coupler 72, an optical delay line 73, an optical frequency shifter 74, an injection locked laser 77, and a controller 78.

The CW light having the optical frequency $\nu_{s1}$ generated by the reference light generator 61 is input into the optical switch 71. The optical switch 71 supplies the input CW light to the optical coupler 72 under the control of the controller 78.

The optical coupler 72 supplies the CW light supplied from the optical switch 71 to the optical delay line 73. The optical coupler 72 supplies light supplied from the optical switch 75 to the optical delay line 73 and the optical switch 76. The optical delay line 73 delays the input light and outputs the delayed light.

The frequency fp of the pilot signal output from the pilot signal extraction unit 21 and the light output from the optical delay line 73 are input into the optical frequency shifter 74. The optical frequency shifter 74 shifts the optical frequency of the light supplied from the optical delay line 73 by the amount corresponding to the frequency fp and outputs the shifted light. Accordingly, the light going around the loop of the optical coupler 72, the optical delay line 73, the optical frequency shifter 74, and the optical switch 75 has an optical frequency represented in Equation (4) after going around j number of times:

$$\nu_j = \nu_{s1} \pm jf_p \qquad (4)$$

The optical frequency shifter 74 is capable of shifting the optical frequency of the input light by the amount corresponding to the frequency fp by, for example, single side band modulation with sine waves (frequency fp) of a dual Mach-Zehnder modulator. Alternatively, the optical frequency shifter 74 may extract the optical frequency mode of the light shifted from the output from an optical comb generator having an optical frequency spacing based on the frequency fp of the pilot signal by the amount corresponding to the frequency fp with an optical filter to shift the optical frequency of the input light by the amount corresponding to the frequency $f_p$. Alternatively, the optical frequency shifter 74 may shift the optical frequency of the input light by the amount corresponding to the frequency fp by optical frequency shift using Doppler shift (fp) of an acousto-optical switch.

The optical switch 75 supplies the light supplied from the optical frequency shifter 74 to the optical coupler 72 under the control of the controller 78. The optical switch 76 supplies the light supplied from the optical coupler 72 to the injection locked laser 77 under the control of the controller 78.

Burst light having a time width determined by the delay time in the optical delay line 73 is output from the optical switch 76. The injection locked laser 77 continuously outputs the burst light. Specifically, the subcarrier light having an optical frequency $\nu_{s1} \pm jf_p$ is output from the injection locked laser 77. The subcarrier light output from the injection locked laser 77 is supplied to the optical modulator 63.

The controller 78 controls turning on and off of the optical switch 71 so that the CW light having the optical frequency $\nu_{s1}$ input into the optical switch 71 goes around the loop of the optical coupler 72, the optical delay line 73, the optical frequency shifter 74, and the optical switch 75 once. The controller 78 controls turning on and off of the optical switch 75 so that the light goes around the loop of the optical coupler 72, the optical delay line 73, the optical frequency shifter 74, and the optical switch 75 j number of times. As a result, the light having an optical frequency $v_{s1} \pm f_p$ is supplied from the optical coupler 72 to the optical switch 76 after the CW light goes around the loop once, and the light having an optical frequency $v_{s1} \pm 2f_p$ is supplied from the optical coupler 72 to the optical switch 76 after the CW light goes around the loop twice. The controller 78 turns on the optical switch 76 when the light having the optical frequency $v_{s1} \pm jf_p$ is supplied from the optical coupler 72 to the optical switch 76 to cause the optical switch 76 to supply the light having the optical frequency represented in Equation (4) to the injection locked laser 77.

As described above, the control light generator 22 shifts the optical frequency $v_{s1}$ of the CW light by the amount corresponding to an integer multiple of the frequency $f_p$ of the pilot signal and multiplexes the shifted light with the CW light having the optical frequency $v_{s0}$ to generate the optical subcarrier modulated signal. Accordingly, the optical multiplexing apparatus is capable of the stable multiplex transmission of information at high density.

[Third embodiment]

A third embodiment will now be described in detail with reference to the drawings. The control light generator 22 generates the optical subcarrier modulated signal with which one data signal is multiplexed in the second embodiment whereas the control light generator 22 generates the optical subcarrier modulated signal with which multiple data signals are multiplexed and multiplexes the optical subcarrier modulated signal on the carrier light in the third embodiment. An optical network system in the third embodiment is the same as the optical network system in FIG. 1. Although the block diagram of an optical multiplexing apparatus is similar to that of the optical multiplexing apparatus in FIG. 3, the optical multiplexing apparatus in the third embodiment differs from the optical multiplexing apparatus in the first embodiment in the control light generator 22.

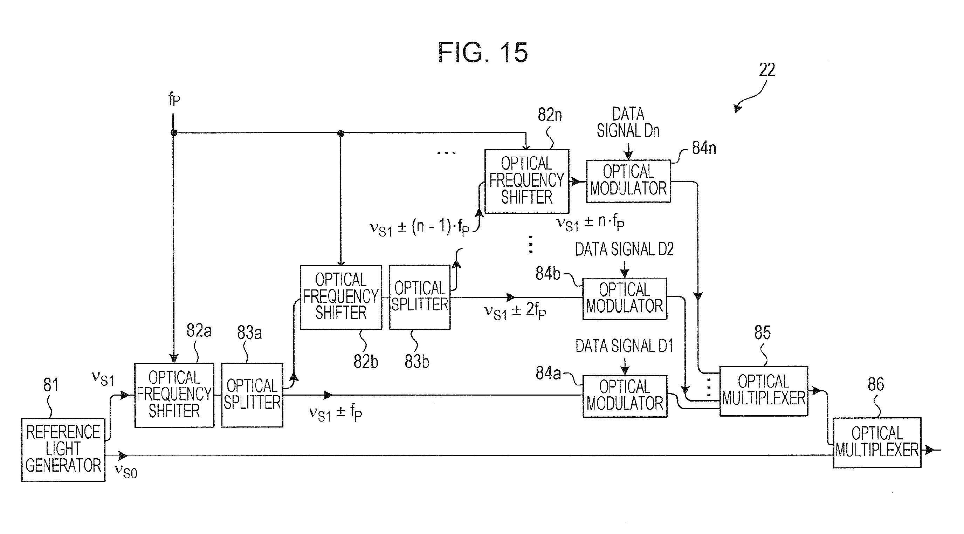

FIG. 15 is a block diagram of the control light generator 22 according to the third embodiment. Referring to FIG. 15, the control light generator 22 includes a reference light generator 81, n-number optical frequency shifters 82a, 82b, ..., and 82n, n-1-number optical splitters 83a, 83b, ..., n-number optical modulators 84a, 84b, ..., and 84n, and optical multiplexers 85 and 86. The reference light generator 81, the optical frequency shifters 82a, 82b, ..., and 82n, the optical splitters 83a, 83b, ..., and the optical modulators 84a, 84b, ..., and 84n has a tree structure.

The reference light generator 81 outputs the two CW lights having the optical frequencies $v_{s0}$ and $v_{s1}$. The optical frequencies $v_{s0}$ and $v_{s1}$ of the two CW lights may be equal to each other. The reference light generator 81 may be formed of, for example, an optical comb source or a CW light source, like the reference light generator 61 described above with reference to FIG. 13.

The frequency fp of the pilot signal output from the pilot signal extraction unit 21 is input into the optical frequency shifters 82a, 82b, ..., and 82n. The optical frequency shifters 82a, 82b, ..., and 82n each shift the optical frequency of the input light by the amount corresponding to the frequency fp to output the shifted light. For example, the CW light having the optical frequency $v_{s1}$ is input into the first-stage optical frequency shifter 82a. Accordingly, the CW light having the optical frequency $v_{s1} \pm f_p$ is output from the optical frequency shifter 82a.

The n-1-number optical splitters 83a, 83b, ... are provided for the outputs from the n-1-number optical frequency shifters 82a, 82b, .... Each of the optical splitters 83a, 83b, ... splits the light output from the corresponding optical frequency shifter in the optical frequency shifters 82a, 82b, ... into two components to supply one component to the next-stage corresponding optical frequency shifters 82b, ..., and 82n. Each of the optical splitters 83a, 83b, ... supplies the other component to the corresponding optical modulator in the n-1-number optical modulators 84a, 84b, ....

For example, the optical splitter 83a splits the CW light having the optical frequency $v_{s1} \pm f_p$ supplied from the optical frequency shifter 82a into two components to supply the components to the optical frequency shifter 82b and the optical modulator 84a. As described above, the optical frequency shifters 82a, 82b, ..., and 82n each shift the optical frequency of the input light by the amount corresponding to the frequency fp to output the shifted light. Accordingly, for example, the optical frequency shifter 82b supplies the CW light having the optical frequency $v_{s1} \pm 2f_p$ to the optical splitter 83b.

The CW lights output from the n-1-number optical splitters 83a, 83b, ... are input into the n-1-number optical modulators 84a, 84b, .... The CW light output from the optical frequency shifter 82n is input into the n-th optical modulator 84n. Accordingly, the CW lights (subcarrier lights) having the optical frequencies $v_{s1} \pm f_p$, $v_{s1} \pm 2f_p$, ..., and $v_{s1} \pm nf_p$ are input into the n-number optical modulators 84a, 84b, ..., and 84n, respectively.

Different n-number data signals D1, D2, ..., and Dn are input into the n-number optical modulators 84a, 84b, ..., and 84n, respectively. The optical modulators 84a, 84b, ..., and 84n modulate the subcarrier signals with the data signals D1, D2, ..., and Dn, respectively, to supply the modulated subcarrier signals to the optical multiplexer 85. Each of the optical modulators 84a, 84b, ..., and 84n is, for example, a $LiNbO_3$ optical modulator or an EA modulator, like the optical modulator 63 described above with reference to FIG. 13. Alternatively, each of the optical modulators 84a, 84b, ..., and 84n may be formed of a nonlinear optical medium, such as an optical fiber, a semiconductor optical amplifier, or a silicon wire waveguide, or a nonlinear optical medium made of lithium niobate ($LiNbO_3$) with a periodically polarization reversed structure.

The optical multiplexer 85 multiplexes the lights output from the optical modulators 84a, 84b, ..., and 84n. The optical multiplexer 86 multiplexes the light supplied from the optical multiplexer 85 with the CW light having the optical frequency $\nu_{s0}$ supplied from the reference light generator 81. Accordingly, the optical subcarrier modulated signal modulated with the data signals D1, D2, ..., and Dn is output from the optical multiplexer 86. The optical subcarrier modulated signal output from the optical multiplexer 86 is supplied to, for example, the optical multiplexer 23 illustrated in FIG. 3.

As described above, the control light generator 22 includes the n-number optical frequency shifters 82a, 82b, ..., and 82n that each shift the optical frequency of the input light by the amount corresponding to the frequency fp of the pilot signal. The light having the optical frequency $\nu_{s1}$ is input into the first-stage optical frequency shifter 82a. The control light generator 22 also includes the n-1-number optical splitters 83a, 83b, .... Each of the optical splitters 83a, 83b, ... splits the light output from the corresponding optical frequency shifter in the n-1-number optical frequency shifters 82a, 82b, ... into two components to supply one component to the next-stage corresponding optical frequency shifters 82b, ..., and 82n. The control light generator 22 further includes the n-number optical modulators 84a, 84b, ..., and 84n that modulate the other lights supplied from the n-1-number optical splitters 83a, 83b, ... and the light supplied from the optical frequency shifter 82n with the multiple different data signals D1, D2, ..., and Dn. The control light generator 22 further includes the optical multiplexer 85 that multiplexes the lights supplied from the n-number optical modulators 84a, 84b, ..., and 84n and the optical multiplexer 86 that multiplexes the light supplied from the optical multiplexer 85 with the light having the optical frequency $\nu_{s0}$ to generate the optical subcarrier modulated signal. Accordingly, the optical multiplexing apparatus is capable of the stable multiplex transmission of information at high density.

Each optical multiplexing apparatus is capable of multiplexing multiple kinds of data signals on the carrier light to transmit the data signals multiplexed on the carrier light. However, each optical multiplexing apparatus causes the data signals multiplexed on the carrier light not to be overlapped with each other. For example, each optical multiplexing apparatus varies the number of the optical frequency shifters 82a, 82b, ..., and 82n to generate the subcarrier lights having different frequencies if$_p$.

[Fourth embodiment]

A fourth embodiment will now be described in detail with reference to the drawings. The reference light generator 61 generates the CW lights having the optical frequencies $\nu_{s0}$ and $\nu_{s1}$ in the second embodiment, as described above with reference to FIG. 13, whereas the lights corresponding to the CW lights and the optical signal having the optical frequencies $\nu_{s0}$ and $\nu_{s1}$ are transmitted on the transmission line and the lights are received to generate the optical subcarrier modulated signal in the fourth embodiment. An optical network system in the fourth embodiment is the same as the optical network system in FIG. 1. Although the block diagram of an optical multiplexing apparatus is similar to that of the optical multiplexing apparatus in FIG. 3, the optical multiplexing apparatus in the fourth embodiment differs from the optical multiplexing apparatus in the first embodiment in the control light generator 22.

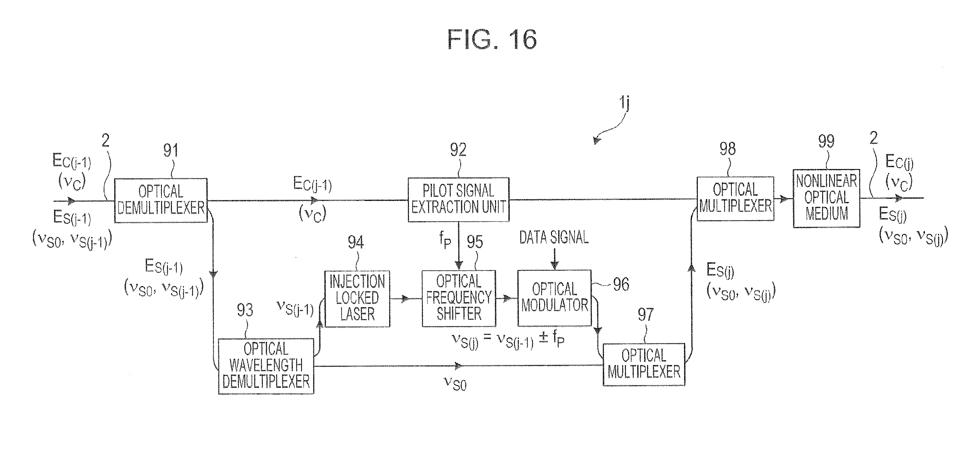

FIG. 16 is a block diagram of the optical multiplexing apparatus according to the fourth embodiment. The optical multiplexing apparatus 1j in FIG. 16 illustrates the j-th optical multiplexing apparatus from the left in the optical multiplexing apparatuses 1a to 1n illustrated in FIG. 2. Referring to FIG. 16, the optical multiplexing apparatus 1j includes an optical demultiplexer 91, a pilot signal extraction unit 92, an optical wavelength demultiplexer 93, an injection locked laser 94, an optical frequency shifter 95, an optical modulator 96, optical multiplexers 97 and 98, and a nonlinear optical medium 99.

The carrier light $E_{c(j-1)}$ having the optical frequency $\nu_c$ is propagated on the transmission line 2. Control light $E_{s(j-1)}$ having an optical frequency $\nu s_0, \nu_{s(j-1)}$ is propagated on the transmission line 2. The optical demultiplexer 91 partly demultiplexes the carrier light $E_{c(j-1)}$ and the control light $E_{s(j-1)}$ propagated on the transmission line 2 to supply the carrier light $E_{c(j-1)}$ to the pilot signal extraction unit 92. The optical demultiplexer 91 demultiplexes the control light $E_{s(j-1)}$ propagated on the transmission line 2 and supply the control light $E_{s(j-1)}$ to the optical wavelength demultiplexer 93. The pilot signal is multiplexed on the carrier light $E_{c(j-1)}$. The pilot signal extraction unit 92 extracts the pilot signal from the carrier light $E_{c(j-1)}$ to extract the frequency fp of the pilot signal.

The optical wavelength demultiplexer 93 demultiplexes the control light $E_{s(j-1)}$ into the lights having the optical frequencies $\nu_{s0}$ and $\nu_{s(j-1)}$ to supply the light having the optical frequency $\nu_{s0}$ to the optical multiplexer 97 and supply the light having the optical frequency $\nu_{s(j-1)}$ to the injection locked laser 94. The light having the optical frequency $\nu_{s0}$ is the CW light, and the light having the optical frequency $\nu_{s(j-1)}$ is the optical subcarrier modulated signal generated by the previous-stage optical multiplexing apparatus (the j-1-th optical multiplexing apparatus).

The injection locked laser 94 outputs the optical subcarrier modulated signal supplied from the optical wavelength demultiplexer 93 as the CW light. In other words, the injection locked laser 94 outputs the CW light having the optical frequency $\nu_{s(j-1)}$.

The frequency fp of the pilot signal extracted by the pilot signal extraction unit 92 and the CW light having the optical frequency $\nu_{s(j-1)}$ output from the injection locked laser 94 are input into the optical frequency shifter 95. The optical frequency shifter 95 shifts the optical frequency $\nu_{s(j-1)}$ of the CW light supplied from the injection locked laser 94 by the amount corresponding to the frequency fp of the pilot signal. Accordingly, the CW light (the subcarrier light) having an optical frequency represented in Equation (5) is output from the optical frequency shifter 95:

$$\nu_{s(j)} = \nu_{s(j-1)} \pm f_p \qquad (5)$$

The subcarrier light output from the optical frequency shifter 95 and the data signal transmitted on the transmission line 2 are input into the optical modulator 96. The optical modulator 96 modulates the subcarrier light with the data signal. The optical modulator 96 is, for example, a $LiNbO_3$ optical modulator or an EA modulator, like the optical modulator 63 described above with reference to FIG. 13. Alternatively, the optical modulator 96 may be formed of a nonlinear optical medium, such as an optical fiber, a semiconductor optical amplifier, or a silicon wire waveguide, or a nonlinear optical medium made of lithium niobate ($LiNbO_3$) with a periodically polarization reversed structure.

The subcarrier light modulated with the data signal, output from the optical modulator 96, and the CW light having the optical frequency $\nu_{s0}$ output from the optical wavelength demultiplexer 93 are input into the optical multiplexer 97. The optical multiplexer 97 multiplexes the CW light having the optical frequency $\nu_{s0}$ with the subcarrier light modulated with the data signal. As a result, the optical subcarrier modulated signal having a frequency represented by Equation (6) is output from the optical multiplexer 97:

$$f_{s(j)} = |\nu_{s0}-\nu_{s(j)}| = |\nu_{s0}-(\nu_{s(j-1)} \pm f_p)| \qquad (6)$$

The light (control light $E_{s(j)}$) having an optical frequency $\nu_{s0},\nu_{s(j)}$ is output from the optical multiplexer 97.

The optical multiplexer 98 multiplexes the optical subcarrier modulated signal supplied from the optical multiplexer 97 with the carrier light in order to multiplex the optical subcarrier modulated signal on the carrier light propagated on the transmission line 2 in the nonlinear optical medium on the transmission line 2.

The carrier light with which the optical subcarrier modulated signal is multiplexed is input into the nonlinear optical medium 99. The carrier light supplied to the nonlinear optical medium 99 is subjected to the optical intermodulation using the optical subcarrier modulated signal in the nonlinear optical medium 99 to multiplex the optical subcarrier modulated signal on the carrier light.

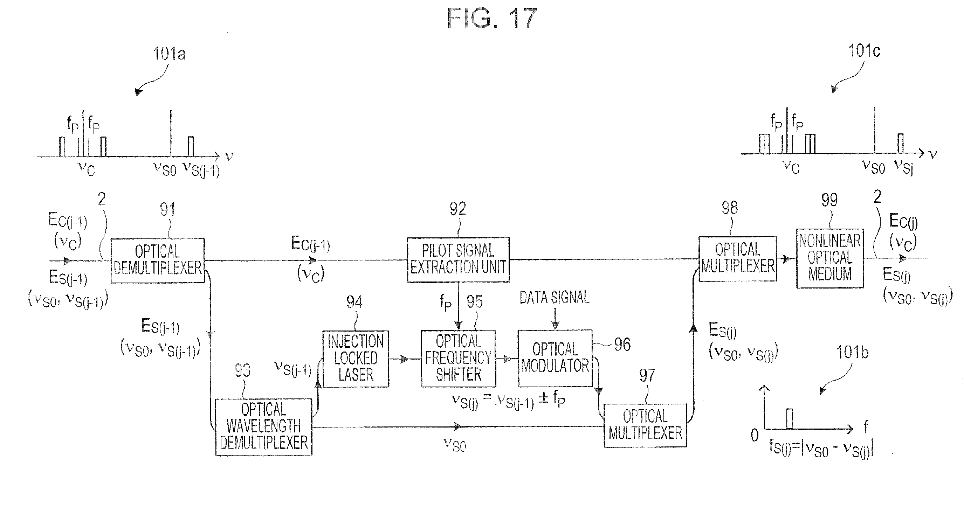

FIG. 17 is a diagram for describing the spectra of signals in the optical multiplexing apparatus in FIG. 16. The same reference numerals are used in FIG. 17 to identify the same components illustrated in FIG. 16. A spectrum 101a illustrated in FIG. 17 indicates the spectrum of the input into the j-th optical multiplexing apparatus in FIG. 17. The horizontal axis represents optical frequency and the vertical axis represents power in the spectrum 101a.

Reference numeral $\nu_c$ in the spectrum 101a denotes the spectrum of the carrier light $E_{c(j-1)}$. The powers at both ends of the optical frequency $\nu_c$ indicate the powers of the pilot signal. The powers outside the pilot signal indicate the powers of the optical subcarrier modulated signal multiplexed in the previous-stage optical multiplexing apparatus.

Reference numeral $\nu_{s0}$ in the spectrum 101a denotes the spectrum of the CW light. Reference numeral $\nu_{s(j-1)}$ in the spectrum 101a denotes the spectrum of the optical subcarrier modulated signal. Specifically, the carrier light $E_{c(j-1)}$ in which the pilot signal is multiplexed with the optical subcarrier modulated signal is propagated on the transmission line 2. The control light $E_{s(j-1)}$ of the CW light having the optical frequency $\nu_{s0}$ and the optical subcarrier modulated signal having the optical frequency $\nu_{s(j-1)}$ is propagated on the transmission line 2.

A spectrum 101b indicates the spectrum of the optical subcarrier modulated signal output from the optical multiplexer 97. The horizontal axis represents frequency and the vertical axis represents power in the spectrum 101b. The optical subcarrier modulated signal having an optical frequency $f_{s(j)}$ is output from the optical multiplexer 97, as illustrated in the spectrum 101b.

A spectrum 101c indicates the spectrum of the output from the nonlinear optical medium 99. The horizontal axis represents optical frequency and the vertical axis represents power in the spectrum 101c. The optical subcarrier modulated signal supplied from the optical multiplexer 97 is multiplexed on the carrier light having the optical frequency $\nu_c$ in the output from the nonlinear optical medium 99, as illustrated in the spectrum 101c. The control light $E_{s(j)}$ of the CW light having the optical frequency $\nu_{s0}$ and the optical subcarrier modulated signal having the optical frequency $\nu_{s(j)}$ is output from the nonlinear optical medium 99.

As described above, the optical demultiplexer 91 demultiplexes the carrier light and the control light propagated on the transmission line 2. The optical wavelength demultiplexer 93 demultiplexes the control light demultiplexed by the optical demultiplexer 91 into the CW light and the optical subcarrier modulated signal generated in the previous-stage optical multiplexing apparatus. The injection locked laser 94 generates the CW light from the demultiplexed optical subcarrier modulated signal. The optical frequency shifter 95 shift the optical frequency of the CW light by the amount corresponding to the frequency of the pilot signal to generate the subcarrier light. The optical modulator 96 modulates the subcarrier light with the data signal. The optical multiplexer 97 multiplexes the CW light supplied from the optical wavelength demultiplexer 93 with the subcarrier light modulated with the data signal to generate the optical subcarrier modulated signal. Accordingly, the optical multiplexing apparatus is capable of the stable multiplex transmission of information at high density.

**Claims**

1. An optical multiplexing apparatus comprising:

    an extraction unit configured to extract a pilot signal multiplexed on light propagated on a transmission line;
    a generator configured to generate an optical subcarrier modulated signal based on a data signal to be transmitted on the transmission line and the pilot signal extracted by the extraction unit;
    a multiplexer configured to multiplex the optical subcarrier modulated signal generated by the generator with carrier light in order to multiplex the data signal on the carrier light propagated on the transmission line; and
    a nonlinear optical medium which is provided on the transmission line and on which the carrier light multiplexed by the multiplexer is incident.

2. The optical multiplexing apparatus according to claim 1, wherein the pilot signal is multiplexed on the carrier light.

3. The optical multiplexing apparatus according to one of claims 1 and 2, wherein the generator includes:

    a subcarrier signal generator configured to generate a subcarrier signal having a frequency resulting from multiplication of the frequency of the pilot signal extracted by the extraction unit,
    a modulator configured to modulate the subcarrier signal generated by the subcarrier signal generator with the data signal, and
    a optical modulator configured to generate the optical subcarrier modulated signal having a light intensity corresponding to a variation in the subcarrier signal modulated by the modulator.

4. The optical multiplexing apparatus according to one of claims 1 and 2, wherein the generator includes:

    a shifter configured to shift an optical frequency of first light by an amount corresponding to an integer multiple of a frequency of the pilot signal extracted by the extraction unit, and
    a modulated signal multiplexer configured to multiplex second light with the first light having the frequency shifted by the shifter in order to generate the optical subcarrier modulated signal,

    wherein either of the first light output from the shifter and the second light or both of the first light output from the shifter and the second light are modulated with the data signal.

5. The optical multiplexing apparatus according to claim 4, wherein the shifter causes the first light to make a loop in order to shift the optical frequency of the first light by the amount corresponding to an integer multiple of the frequency of the pilot signal.

6. The optical multiplexing apparatus according to claim 4, wherein the generator further includes:

    a first demultiplexer configured to demultiplex the carrier light and first control light which are propagated on the transmission line,
    a second demultiplexer configured to demultiplex the first control light demultiplexed by the first demultiplexer into second control light and third control light, and to output the third control light as the second light, and
    a converter configured to convert the second control light into continuous light, and to output the converted continuous light as the first light.

7. The optical multiplexing apparatus according to one of claims 1 and 2, wherein the generator includes:

    a plurality of shifters each configured to shift an optical frequency of input light by an amount corresponding to the frequency of the pilot signal, first light being input into a first-stage shifter in the plurality of shifters connected in series,

a plurality of splitters each configured to split the light output from the corresponding shifter in the plurality of shifters, and to supply one split light to the corresponding shifter in the next-stage plurality of shifters,

a plurality of optical modulators each configured to modulate the other split light output from each of the plurality of splitters and the light output from the last-stage shifter in the plurality of shifters with a plurality of different data signals,

a first optical multiplexer configured to multiplex the lights output from the plurality of optical modulators, and

a second optical multiplexer configured to multiplex the light output from the first optical multiplexer with second light in order to generate the optical subcarrier modulated signal,

wherein the first light and the second light are generated therein.

8. An optical network system comprising:

a transmission line; and

a plurality of optical multiplexing apparatuses each including an extraction unit that extracts a pilot signal multiplexed on light propagated on a transmission line, a generator that generates an optical subcarrier modulated signal based on a data signal transmitted on the transmission line and the pilot signal extracted by the extraction unit, a multiplexer that multiplexes the optical subcarrier modulated signal generated by the generator with carrier light in order to multiplex the data signal on the carrier light propagated on the transmission line, and a nonlinear optical medium which is provided on the transmission line and on which the carrier light multiplexed by the multiplexer is incident.

## FIG. 1

# FIG. 2

# FIG. 3

$E_{C(j-1)}, (\nu_C)$ → PILOT SIGNAL EXTRACTION UNIT (21) → OPTICAL MULTIPLEXER (23) → NONLINEAR OPTICAL MEDIUM (24) → $E_{C(j)}, (\nu_C)$

$f_P$ → CONTROL LIGHT GENERATOR (22)

DATA SIGNAL →

$E_{S(j)}, (f_j = jf_P)$

# FIG. 4

# FIG. 5

# FIG. 6

# FIG. 7

# FIG. 8

# FIG. 9

## FIG. 10

## FIG. 11

## FIG. 12

# FIG. 13

22

$f_P$

62

$\nu_{S1}$

OPTICAL FREQUENCY MULTIPLIER SHIFTER

$\nu_{S1} \pm jf_P$

63

DATA SIGNAL → OPTICAL MODULATOR

64

61

REFERENCE LIGHT GENERATOR

$\nu_{S0}$

OPTICAL MULTIPLEXER

# FIG. 14

# FIG. 15

EP 2 566 083 A2

FIG. 16

EP 2 566 083 A2

FIG. 17

101a

101c

$E_{C(j-1)}$
$(\nu_C)$

$E_{S(j-1)}$
$(\nu_{S0}, \nu_{S(j-1)})$

$f_P | f_P$

$\nu_C$

$\nu_{S0}$ $\nu_{S(j-1)}$

$\nu$

2

91 — OPTICAL DEMULTIPLEXER

$E_{S(j-1)}$
$(\nu_{S0}, \nu_{S(j-1)})$

$E_{C(j-1)}$
$(\nu_C)$

93 — OPTICAL WAVELENGTH DEMULTIPLEXER

$\nu_{S0}$

$\nu_{S(j-1)}$

94 — INJECTION LOCKED LASER

95 — OPTICAL FREQUENCY SHIFTER

92 — PILOT SIGNAL EXTRACTION UNIT

$f_P$

DATA SIGNAL

96 — OPTICAL MODULATOR

$\nu_{S(j)} = \nu_{S(j-1)} \pm f_P$

97 — OPTICAL MULTIPLEXER

$E_{S(j)}$
$(\nu_{S0}, \nu_{S(j)})$

98 — OPTICAL MULTIPLEXER

99 — NONLINEAR OPTICAL MEDIUM

2

$E_{C(j)}$
$(\nu_C)$

$E_{S(j)}$
$(\nu_{S0}, \nu_{S(j)})$

$f_P | f_P$

$\nu_C$

$\nu_{S0}$ $\nu_{Sj}$

$\nu$

101b

0

$f_{S(j)} = |\nu_{S0} - \nu_{S(j)}|$

$f$

**REFERENCES CITED IN THE DESCRIPTION**

**Patent documents cited in the description**

- JP 3436310 B